(19) **Europäisches Patentamt / European Patent Office / Office européen des brevets**

(11) **EP 3 708 243 B1**

(12) # EUROPEAN PATENT SPECIFICATION

(45) Date of publication and mention
of the grant of the patent:
**17.04.2024 Bulletin 2024/16**

(21) Application number: **20162606.6**

(22) Date of filing: **12.03.2020**

(51) International Patent Classification (IPC):
**B01D 63/02** *(2006.01)*          **A23L 2/74** *(2006.01)*
**C12H 1/07** *(2006.01)*          **B01D 61/20** *(2006.01)*
**B01D 65/00** *(2006.01)*

(52) Cooperative Patent Classification (CPC):
**B01D 63/021; A23L 2/74; B01D 61/20;**
**B01D 63/02; B01D 63/024; B01D 65/00;**
**C12H 1/063;** B01D 2313/2011; B01D 2313/206;
B01D 2313/2062

(54) **FILTERING METHOD AND HOLLOW FIBER MEMBRANE MODULE**

FILTRIERUNGSVERFAHREN UND HOHLFASERMEMBRANMODUL

PROCÉDÉ DE FILTRAGE ET MODULE À MEMBRANE À FIBRES CREUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2019 JP 2019045201**

(43) Date of publication of application:
**16.09.2020 Bulletin 2020/38**

(73) Proprietor: **Asahi Kasei Kabushiki Kaisha
Tokyo 1000006 (JP)**

(72) Inventor: **Nakamoto, Kohei
Tokyo, 100-0006 (JP)**

(74) Representative: **Strehl Schübel-Hopf & Partner
Maximilianstrasse 54
80538 München (DE)**

(56) References cited:
EP-A1- 2 332 638          EP-A1- 2 787 254
WO-A1-2018/092346          JP-A- 2009 160 561
US-A1- 2011 036 240          US-A1- 2011 192 781
US-A1- 2014 216 258

**Description**

TECHNICAL FIELD

The present disclosure relates to a hollow fiber membrane module having a hollow fiber membrane bundle composed of a plurality of bundled hollow fiber membranes, in particular, a hollow fiber membrane module having an improved pressure resistance, and a filtration method wherein a filtration operation of a liquid containing, for example, carbonic acid is performed while ensuring a sanitary property for a long period of time .

BACKGROUND

Hollow fiber membranes are known as membranes used in membrane filtration methods that utilize microfiltration or ultrafiltration membranes for gas-liquid absorption, degassing, filtration and other applications. Membrane modules using hollow fiber membranes have been widely used for various membrane separation applications for their large membrane area and the capability of reducing the device size. As the membrane modules of this type, such membrane modules are known which have a hollow fiber membrane bundle composed of a plurality of hollow fiber membranes fixed at both ends with a resin portion.

Filtration methods using a hollow fiber membrane module are roughly classified into two types: internal pressure type in which feed water is allowed to permeate through the hollow fiber membrane from the inner surface side to the outer surface side to afford filtered water; and external pressure type in which feed water is allowed to permeate through the hollow fiber membrane from the outer surface side to the inner surface side to afford filtered water.

A module case in which a hollow fiber membrane bundle is inserted receives a positive pressure applied from the inside to the outside during filtration operation and hence needs to have a pressure resistance according to the operating conditions. Some filtration applications may require that the module case have high pressure resistance.

For example, high pressure resistance may be required in applications for filtrating beverages having dissolved carbonic acid. For such filtration of drinking water like carbonated water, it is necessary to keep the pressure on the secondary side higher than usual because the filtration operation needs to be carried out with the gas kept dissolved in the beverage. As a result, the filtration pressure increases and thus a large load may be applied to the module case. In the case of a hollow fiber membrane module integrated with a module case, as a case material, it is known to use a material with a higher elastic modulus, such as a short glass fiber-reinforced resin, in order to improve the pressure resistance (see PTL 1). One known method for manufacturing a housing for inserting therein a cartridge-type membrane module involves winding long glass fiber and matrix resin around a mandrel as a mold, completely curing the matrix resin, pulling out the cured resin from the mold, and subjecting it to cutting (see PTL 2).

CITATION LIST

Patent Literature

     PTL 1: JP2009-160561A
     PTL 2: JP2013-117250A

EP 2787254 A1 discloses a pressure vessel for use in seawater desalination by reverse osmosis using hollow fiber membranes, comprising a pipe body formed by winding continuous fibers by filament winding. The pipe body further comprises an inner seal layer.

US 2014092346 A1 discloses a hollow fiber membrane module comprising a single wall casing.

WO 2018092346 A1 discloses a pressure vessel used in seawater desalination or water purification by reverse osmosis, the pressure vessel comprising a tube body made of a fiber-reinforced resin as an inner layer.

SUMMARY

(Technical Problem)

However, even when a glass fiber-reinforced resin is used to mold a housing, the wall thickness of the pipe part needs to be increased depending on the condition of the filtration operation. This would be achieved by increasing the wall thickness either toward the inner side or toward the outer side of the pipe. When the wall thickness is increased toward the inner side, the filtration area and hence the product performance undesirably decrease. On the other hand, when the wall thickness is increased toward the outer side, the filtration area can be maintained, but a die for extrusion molding of the pipe part needs to be prepared in each case, which results in enormous capital expenditures.

In addition, as described in PTL 2, the pressure resistance in the circumferential direction and in the radial direction can be controlled to some extent by adjusting the winding angle of glass fiber. However, the housing of PTL 2 cannot be a proper housing as there is a concern that the glass fiber may be exposed to the inner surface of the housing and contacts the food. Further, such a housing is mainly used as a housing of spiral membranes. Both the hollow fiber membrane module and spiral module housings may be provided with a side port for removal of filtrate or retentate. In a case-integrated hollow fiber membrane module, there must be enough space between the inner surface around the side port and the outer circumference of the hollow fiber membrane bundle to allow the filtrate or washing liquid to flow. In some cases, a flow straightening cylinder is provided to reduce the liquid flow near the nozzle part. Therefore, in many cases, the pipe part and the header part for housings are molded individually and integrated later. However, in manufacturing methods such as those described in PTL 2, it is difficult to mold a housing such that the inner diameter changes along the length because the product must necessarily be pulled out after wound around a mandrel.

In systems for drinking water filtration, in order to ensure a sanitary property, the feed introduction part and retentate discharge part which are located in the longitudinal direction of the hollow fiber membrane module are often fixedly connected by stainless-steel pipes. In this case, it was found that since the longitudinal elongation of the hollow fiber membrane module that occurs upon pressure application is limited by the fixed stainless-steel pipes, a larger load is generated in the radial direction compared with cases where the module is not longitudinally fixed.

Also, as a measure to remove material clogging the membrane for achieving a longer filtration operation, an operation called backwashing is sometimes utilized. In backwashing, liquids are allowed to flow to the side opposite the filtration side, (i.e., from the secondary side toward the primary side) for a short period of time in the middle of filtration. Backwashing is performed at a frequency of about once every several minutes to several tens of minutes, depending on the type of liquids to be filtrated. Because the filtration module is repeatedly used for a long period of time, it undergoes a considerable number of repeated pressure fluctuations. As liquids used for backwashing, filtrates may be used, or cold water or warm water may be used. When backwashing is performed with a filtrate, the filtration operation can be resumed immediately after the operation is completed. On the other hand, when the filtrate is a carbonate-containing liquid, a higher pressure load is generated in the housing, and also a high frequency of repeated pressure load is generated. When the hollow fiber membrane module is longitudinally fixed, a large load is generated in the radial direction of the module. It was found that a stress tends to be concentrated in the pipe part and the header part in the housing.

(Solution to Problem)

As a result of intensive studies to address the above-mentioned problem, the inventors have found that the problems can be solved by adjusting the diameter expansion ratio of the housing with respect to the applied pressure in the hollow fiber membrane module. The present disclosure has thus been completed. Specifically, the invention is set out in the appended claims.

(Advantageous Effect)

According to the present disclosure, it is possible to provide a highly practical hollow fiber membrane module and a filtration method, which allow for a stable highpressure filtration operation of a carbonic acid-containing liquid for a long period of time while employing an operation system and an operation method capable of ensuring a sanitary property.

BRIEF DESCRIPTION OF THE DRAWINGS

In the accompanying drawings:

FIG. 1 is a longitudinal end view of a hollow fiber membrane module according to an embodiment of the present disclosure;
FIG. 2 is a vertical cross-sectional view showing a variation of the hollow fiber membrane module of FIG. 1;
FIG. 3 is a cross-sectional view of a glass fiber-containing portion of the module case of FIG. 1;
FIG. 4 is a cross-sectional view of a glass fiber-containing portion of the module case of FIG. 1, which covers the outer circumferential surface of the plastic part;
FIG. 5 is a diagram showing the inclination of the glass fiber in the module case of FIG. 1;
FIG. 6 is a diagram showing a form of a glass fiber fabric wound in the module case of FIG. 1;
FIG. 7 is a diagram showing a form of a glass cloth for covering a nozzle part; and
FIG. 8 is a configuration diagram showing an exemplary filtration system for effervescent beverages according to an embodiment of the present disclosure.

DETAILED DESCRIPTION

Hereinafter, an embodiment for carrying out the present disclosure (hereinafter also simply referred to as "present embodiment") is described in detail. The following embodiment is an example for explaining the present disclosure and is not intended to limit the scope of the present disclosure. The present disclosure can be carried out in any suitable variations within the scope of the claims.

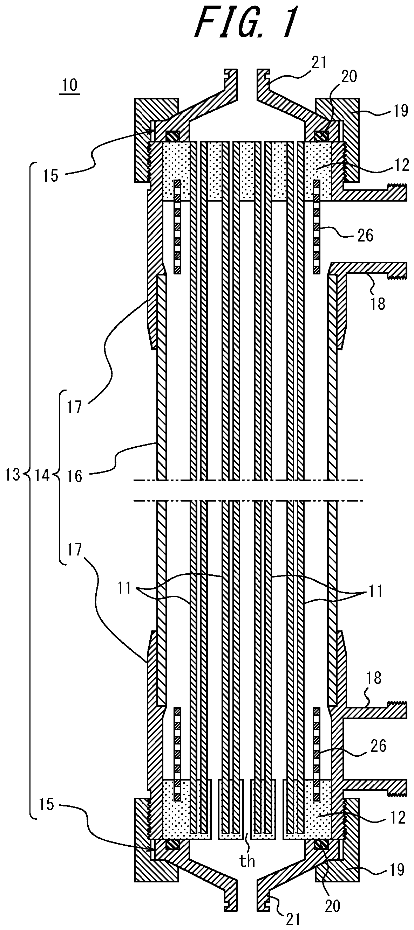

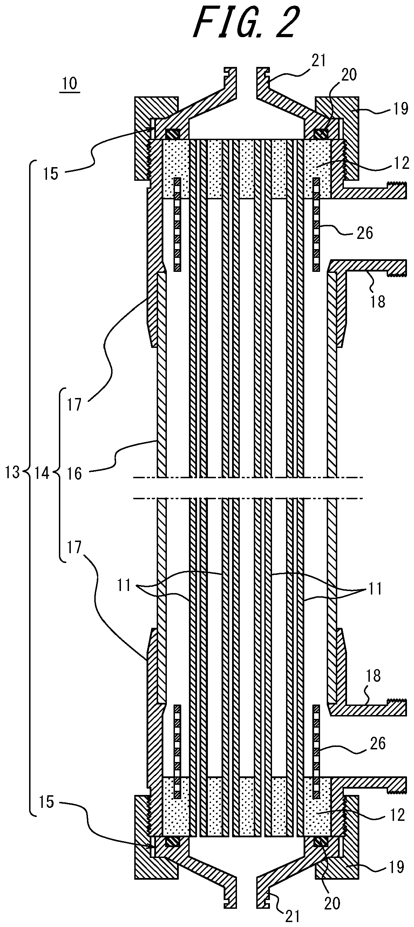

A hollow fiber membrane module 10 according to the present embodiment shown in FIGS. 1 and 2 is used, for example, in tap water treatment applications, food purification applications, or ultrapure water production applications. The hollow fiber membrane module 10 of the present embodiment includes a hollow fiber membrane 11, a potting material 12, and a module case 13.

The hollow fiber membrane 11 is porous and configured to filtrate fluids passing therethrough. In the present embodiment, the hollow fiber membrane 11 is accommodated in the module case 13 in the form of a hollow fiber membrane bundle in which a plurality of hollow fiber membranes 11 are bundled.

The hollow fiber membrane 11 may be made of any material and examples of materials usable herein include polyvinylidene fluorides, polyolefins including polyethylenes and polypropylens, ethylene vinyl alcohol copolymers, polyamides, polyetherimides, polystyrenes, polyvinyl alcohols, polyphenylene ethers, polyphenylene sulfides, polysulfones, polyethersulfones, acrylonitriles, and acetic acid celluloses. Suitable are crystalline thermoplastic resins such as polyethylenes, polypropylenes, ethylene-vinyl alcohol copolymers, polyvinyl alcohols, and polyvinylidene fluorides, which have crystallinity, from the viewpoint of strength development. More suitable are polyolefins and polyvinylidene fluorides, which are hydrophobic and hence have high water resistance and also can be expected to have durability in the filtration of usual aqueous liquids. Particularly suitable are polyvinylidene fluorides, which having excellent chemical durability such as chemical resistance. Examples of polyvinylidene fluorides include vinylidene fluoride homopolymers and vinylidene fluoride copolymers having a vinylidene fluoride content of 50 mol% or more. Vinylidene fluoride copolymers include copolymers of vinylidene fluoride and one or more compound selected from ethylene tetrafluoride, propylene hexafluoride, ethylene trifluoride and ethylene. Most preferred polyvinylidene fluorides are vinylidene fluoride homopolymers.

The hollow fiber membrane 11 can be of any size. Hollow fiber membranes having an inner diameter of 0.4 mm to 3 mm, an outer diameter of 0.8 mm to 6 mm, a membrane thickness of 0.2 mm to 1.5 mm, a blocking pore diameter of 0.02 $\mu$m to 1 $\mu$m, and a pressure resistance of 0.1 MPa to 1.0 MPa are preferably used.

Potting material 12 fixes at least a portion of the hollow fiber membrane 11 to the module case 13. In the present embodiment, the potting material 12 is integrated with opposing ends of the hollow fiber membrane 11 and fixed to a housing body 14 (later described) of the module case 13. In the present embodiment, the potting material 12 is formed by filling and curing the potting material 12 between the outer circumferential surface of the hollow fiber membrane 11 and the inner circumferential surface of the housing body 14.

The potting material 12 may be made of any material. For example, two-part curable resins are used, with urethane resins, epoxy resins, silicone resins and the like being suitably used. Desirably, the potting material 12 is appropriately selected in consideration of viscosity, pot life, hardness and mechanical strength of a cured product, physical and chemical stability to feeds, adhesion to the hollow fiber membrane 11, and adhesion to the module case 13. For example, from the viewpoint of shortening the manufacturing time and improving productivity, it is preferred to use urethane resins, which have short pot life. When a mechanical strength is required, it is preferred to use epoxy resins, which have mechanical durability. Two or more of these resins may be used for the potting material 12.

The module case 13 accommodates therein the hollow fiber membrane 11. The module case 13 can be of any size but is preferably 700 mm to 2,500 mm in overall length and 20 mm to 250 mm in outer diameter. The wall thickness of the module case is desirably 2 mm to 20 mm, more desirably 4 mm to 18 mm. The module case 13 includes the housing body 14 and two caps 15.

In the present embodiment, the housing body 14 is a cylindrical body having a cylindrical shape as a whole, and the hollow fiber membrane 11 is accommodated in the cylindrical body. In the present embodiment, the housing body 14 includes a pipe-shaped part 16 and two header parts 17, which are mutually separate members. However, the pipe-shaped part 16 and the header parts 17 may be a single member which cannot be divided.

In the present embodiment, the pipe-shaped part 16 has a cylindrical shape. The header part 17 is engaged with each of the axial ends of the pipe-shaped part 16. In the present embodiment, the pipe-shaped part 16 and the headers 17 are bonded together to form an integrated housing body 14.

In the present embodiment, the header part 17 has a cylindrical portion. The header part 17 is engaged with the pipe-shaped part 16 such that the inside of the header part 17 communicates with the inside of the pipe-shaped part 16 and that they are coaxial with each other.

In the present embodiment, the header part 17 has a nozzle part 18. The side surface of the cylindrical portion of the header part 17 includes the nozzle part 18 projecting perpendicular to the axial direction of the cylindrical portion.

The nozzle part 18 is provided on the pipe-shaped part 16 side than the potting material 12 in the axial direction of the header part 17.

An open nozzle part 18 (in the example of FIG. 1, the upper nozzle part 18, and in the example of FIG. 2, both the upper and lower nozzle parts 18) functions as a port for allowing fluids to pass between the inside and the outside of the header part 17. Accordingly, the nozzle part 18 may allow fluids to flow into and out of the internal space defined by the inner circumferential surface of the housing body 14, the outer circumferential surface of each hollow fiber membrane 11, and the exposed surface of the potting material 12.

In the present embodiment, the cap 15 is cylindrical or tapered with one end opened. The open ends of the caps 15 are engaged with the housing body 14 at opposing axial ends of the housing body 14. In the present embodiment, the cap 15 is fixed to the housing body 14 by a nut 19. An O-ring 20 is provided between the cap 15 and at least one of the potting material 12 and the housing body 14, and the inner space defined by the cap 15 and the housing body 14 is liquid-tightly sealed.

A conduit 21 is provided on the small diameter side of the closed end or tapered portion of the cap 15. The conduit 21 protrudes parallel to the axial direction of the housing body 14. The conduit 21 functions as a port for allowing fluids to pass between the inside and the outside of the cap 15. Thus, the conduit 21 may allow fluids to flow into and out of the internal space defined by the cap 15 and the potting material 12.

In the embodiment of FIG. 1, one longitudinal end of the hollow fiber membrane 11 is opened in the space defined by the potting material 12 and the cap 15 (upper side in the drawing), and the other longitudinal end is embedded in the potting material 12 and hence the opening is closed (lower side in the drawing). An axial through hole th is formed in the potting material 12 in which one end of the hollow fiber membrane 11 is embedded. The nozzle part 18 on the side where one end of the hollow fiber membrane 11 is embedded is closed.

In the hollow fiber membrane module 10 having such a configuration, for example, the feed flowed into the hollow fiber membrane module 10 through the conduit 21 (lower side in the drawing) on the side where the hollow fiber membrane 11 is embedded flows from the through hole th into the inner space defined by the inner circumferential surface of the housing body 14, the outer circumferential surface of the hollow fiber membrane 11, and the exposed surface of the potting materials 12. Portions of the feed flowed into the inner space are filtrated by the hollow fiber membrane 11 while passing through the hollow portion of the housing body 14 toward the opened nozzle part 18 (upper side in the drawing). The filtrate passes through the hollow portion of the hollow fiber membrane 11 and is discharged from the conduit 21 (upper side in the drawing) on the side where the opening is exposed. The feed that reached the opened nozzle part 18 is discharged as a retentate.

As shown in FIG. 2, the hollow fiber membrane module 10 may have a configuration wherein opposing longitudinal ends of the hollow fiber membrane 11 are opened in the space defined by the potting material 12 and the cap 15, a through hole is formed in neither of the potting materials 12, and both of the nozzle parts 18 are opened.

The hollow fiber membrane module 10 may have a flow straightening cylinder 26 in the header part 17. The flow straightening cylinder 26 is disposed so as to be coaxial with the header part 17. The flow straightening cylinder 26 has one end embedded in the potting material 12 and the other end terminated on the longitudinal center side of the pipe-shaped part 16 than the nozzle part 18.

In the hollow fiber membrane module 10 having such a configuration, for example, portions of the feed flowed into the hollow fiber membrane module 10 from one of the conduits 21 are filtrated by the hollow fiber membrane 11 while the feed passes through the hollow portion of the hollow fiber membrane 11 toward the other conduit 21. The filtrate flows into an internal space defined by the inner circumferential surface of the housing body 14, the outer circumferential surface of the hollow fiber membrane, and the exposed surface of the potting materials 12. The filtrate flowed into the internal space is discharged from the nozzle part 18. In addition, the feed that has passed through the hollow of the hollow fiber membrane to the other conduit 21 is discharged from the conduit 21 as a retentate. Alternatively, by allowing the feed to flow into one of the nozzle parts 18 of the hollow fiber membrane module 10, the filtrate may be discharged from the conduit 21 and the retentate may be discharged from the other nozzle part 18.

At least a portion of the module case 13 contains glass fiber. In the present embodiment, the housing body 14 in the module case 13 contains glass fiber. More specifically, in the present embodiment, at least one of the pipe-shaped part 16 and the header part 17, which are cylindrical in the housing body 14, contains glass fiber. More specifically, in the present embodiment, the pipe-shaped part 16 and the header part 17 contain glass fiber. Glass fiber is known as E glass, C glass, S glass, D glass or the like depending on its chemical composition. Appropriate glass fiber can be selected and applied.

The module case 13 has a plastic part made of thermoplastic and a glass fiber-reinforced resin part containing glass fiber. The plastic part can be manufactured by injection molding, extrusion molding or other techniques. Smaller parts can be molded in advance and later joined together by thermal welding, solvent bonding or with adhesives to form the plastic part. Alternatively, the plastic part can be molded as a single piece in advance. Examples of materials of the plastic part include polyethylenes polypropylenes, polysulfones, polyethersulfones, polyvinylidene fluorides, ABS resins, vinyl chloride resin, and modified polyphenylene ethers. The glass fiber-reinforced resin part is provided in a portion of the module case 13, which contains glass fiber. In addition to glass fiber, the glass fiber-reinforced resin part further contains a curable resin. Curable resins include thermosetting resins and photocurable resins. In the present embodiment, the curable resin is a thermosetting resin.

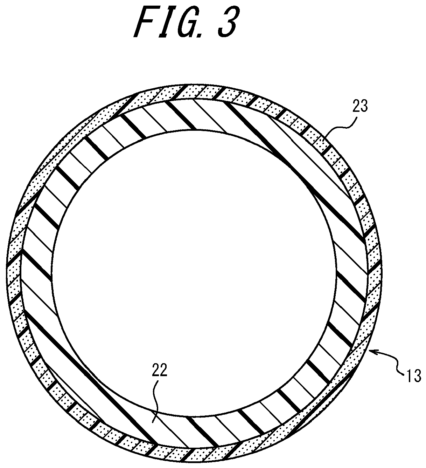

As shown in FIG. 3, in the present embodiment, the plastic part 22 and glass fiber-reinforced resin part 23 are stack in the wall thickness direction of the module case 13. In the present embodiment, the plastic part 22 is disposed as a layer on the inner surface side in the wall thickness direction of the module case 13, and the glass fiber-reinforced resin part 23 is disposed as a layer on the outer surface side in the wall thickness direction of the module case 13.

In at least a portion of the glass fiber-containing portion of the module case 13, the ratio of the thickness of the cover layer formed of the glass fiber-reinforced resin part 23 to the wall thickness of the module case 13 is 5% or more and 50% or less. That is, the value of (thickness (mm) of the cover layer formed of the glass fiber-reinforced resin part 23/wall thickness (mm) of the module case 13)×100 is 5% or more and 50% or less. If the value is lower than 5%, effects of reinforcing pressure resistance may not be sufficiently obtained depending on the type of the glass fiber. If the value is higher than 50%, the pressure resistance effect is obtained, but there is a possibility that curing heat generated during molding of the glass fiber-reinforced resin part 23 increases, which may cause expansion of the plastic part 22 and hence cause changes in the overall length of the module case 13 after curing.

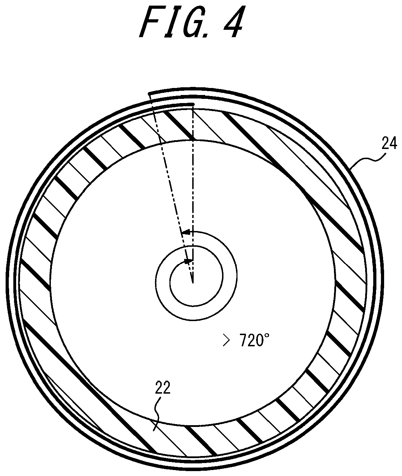

The glass fiber which constitutes the glass fiber-reinforced resin part 23 in the present embodiment extends 3 cm or more in length. As shown in FIG. 4, a glass fiber 24 also desirably extends continuously at least 720° around the tube axis of the plastic part 22. With the glass fiber 24 continuously extending over the plastic part 22, it is possible to uniformly increase the pressure resistance because no large local deformations occur even if the plastic part 22 receives an internal pressure load in the radial direction. With the glass fiber 24 being continuously wound around the plastic part 22, it is possible to uniformly increase the pressure resistance because no large local deformations occur even if the plastic part 22 receives an internal pressure load in the radial direction.

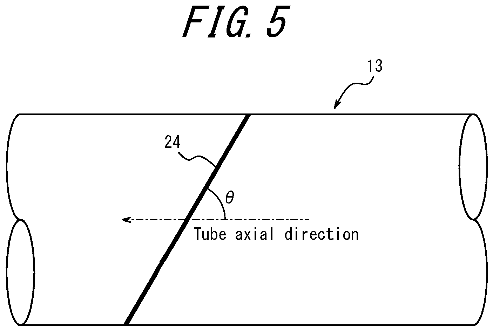

Further, as shown in FIG. 5, the glass fiber 24 extends at an angle $\theta$ of 60° to 120° with respect to the tube axial direction of the module case 13. More preferably, the glass fiber 24 extends at an angle $\theta$ of 75° to 105° and even more preferably at an angle $\theta$ of 85° to 95° with respect to the tube axial direction. With the glass fiber 24 extending at an angle close to 90° with respect to the tube axis direction, it is possible to limit expansion of the module case in the radial direction due to internal pressure.

The surface of the glass fiber 24 may be treated with a silane coupling agent to improve its adhesion to thermosetting resin.

In the present embodiment, the glass fiber 24 continuously runs within a processed fabric as in, for example, glass cloth, roving cloth or chopped strand mat, to cover the plastic part 22. Glass cloth is a fabric woven of strands, a bundle of twisted glass fibers. Roving cloth is a fabric woven of untwisted strands. Glass roving may be used for the glass fiber 24.

The types of the glass cloth and roving cloth are not particularly limited, and a plain weave, a twill weave, a perforated plain weave, a satin weave or the like can be used. The weight per square meter of the glass cloth, roving cloth or chopped strand mat is desirably 50 g/m$^2$ to 600 g/m$^2$, more desirably 100 g/m$^2$ to 500 g/m$^2$, and even more desirably 200 g/m$^2$ to 400 g/m$^2$. If the weight is lower than 50 g/m$^2$, an enough strength can be obtained only when the cloth or mat is stacked in multiple layers. Also, the stacking step becomes complicated. When the weight is higher than 600 g/m$^2$, the glass or roving cloth may not well follow the contour of the plastic part and cause poor adhesion. In particular, when covering the nozzle part with the glass cloth or the like, the weight per square meter is desirably 300 g/m$^2$ or less because the shape of the nozzle part is complicated.

The width of the fabric made of the glass fiber 24 is desirably 30 mm or more and 140 mm or less. If the width is smaller than 30 mm, the working time required for one covering operation becomes longer. On the other hand, if the width is larger than 140 mm, the fabric made of the glass fiber 24 may kink during winding, and wrinkles may easily occur.

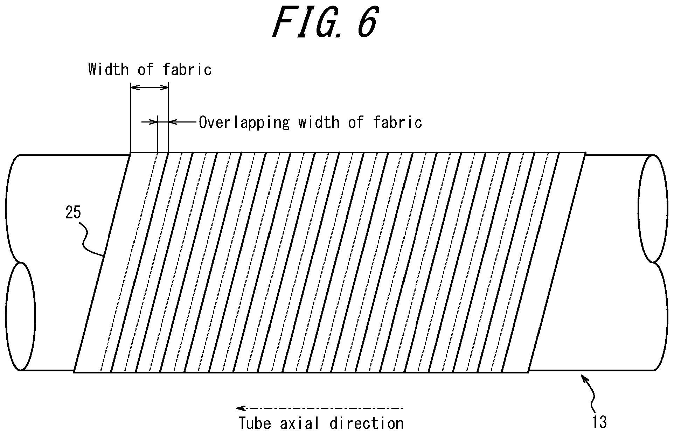

As shown in FIG. 6, the fabric 25 made of the glass fiber 24 is spirally wound around the tubular part of the module case 13. On average, the overlapping ratio of the fabric 25 made of the glass fiber 24, adjoining each other in the tube axial direction by winding, is desirably 3% or more and 70% or less, more desirably 10% to 50%, and even more desirably 20% to 40%. The overlapping ratio of the fabric 25 refers to a ratio of the overlapping width of the fabric 25 with respect to the width of the fabric 25 in the tube axis direction. If the overlap ratio is lower than 3%, the fabric 25 may not be overlapped onto itself at some areas of the module case 13. If it is higher than 70%, the winding step becomes time-consuming, which is not efficient.

In the present embodiment, a plurality of different fabrics 25 made of the glass fiber 24 may be stacked. For example, a glass cloth may cover the plastic part 22 of the module case 13 and at least one of a roving cloth and a chopped strand mat may cover the outer circumferential surface of the glass cloth. Alternatively, a roving cloth may cover the plastic part 22 and at least one of a glass cloth and a chopped strand mat may cover the outer circumferential surface of the roving cloth. Alternatively, a chopped strand mat may cover the plastic part 22 and at least one of a glass cloth and a roving cloth may cover the outer circumferential surface of the chopped strand mat.

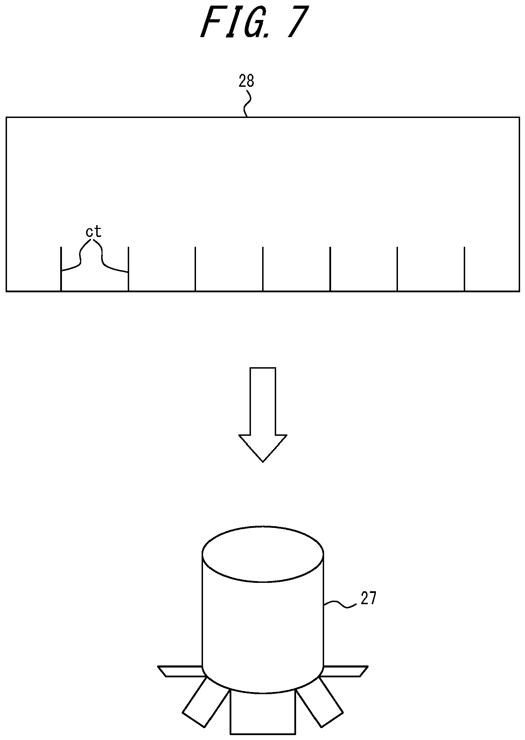

When the glass fiber-reinforced resin part 23 is provided as a cover layer in a hollow fiber membrane module 10 such as that used in the present embodiment, the glass cloth or the like may cover three segments individually: the pipe-shaped part 16, the header 17, and the nozzle part 18. In this case, it is desirable that the respective glass cloths or the like are overlapped at the boundary between the pipe-shaped part 16 and the header part 17. Depending on the construction of the housing, the overlapping width is desirably 50 mm or more. Similarly, it is desirable that the respective glass cloths or the like are overlapped at the boundary between the header part 17 and the nozzle part 18. As shown in FIG. 7, as the shape of the glass cloth 27 for the nozzle part 18, in the glass cloth 28 cut out into a rectangular shape in advance, it is desirable that the long side is long enough such that the glass cloth 27 can be wound around the nozzle part 18 360° or more, and it is only necessary that the short side is long enough such that the glass cloth 27 can cover the entire length of the nozzle part 18 and the header part 17 main body. A shape is desired wherein the lower end of the long side is cut at appropriate intervals to improve the followability to the header part 17 main body and the glass cloth to be overlapped. Although the root portion of the nozzle part 18 is a location where a stress is likely to be concentrated, it is possible to exert a reinforcing effect against the stress by providing the glass fiber-reinforced resin part 23 as described above.

Epoxy resins, epoxy unsaturated polyester resins and the like can be used as thermosetting resins used for the glass fiber-reinforced resin part 23, with epoxy resins being more suitably used. As the main agent of the epoxy resin, bisphenol A type epoxy resin, bisphenol F type epoxy resin, trimethylolpropane polyglycidyl ether, neopentyl glycol diglycidyl ether, 1,4-butanediol diglycidyl ether, 1,6-hexanediol diglycidyl ether and the like can be used alone or mixed appropriately. Amine-based curing agents and acid anhydrides are used as the curing agents, with amine-based curing agents being preferably used for curing at room temperature. It is desirable that when the main agent and the curing agent are mixed, the initial viscosity after mixing is 500 mPa·s or more and 5,000 mPa·s or less. If the viscosity is higher than 5,000 mPa·s, the epoxy resin cannot be easily impregnated in the glass fiber, so that gas bubbles tend to remain in the glass fiber-reinforced resin part 23. If the viscosity is 500 mPa·s or less, the epoxy resin once impregnated may drip from the glass fiber 24 and may not be cured in a desired form.

Next, the manufacturing process of the hollow fiber membrane module 10 will be described. The explanation of the manufacturing process of the hollow fiber membrane module 10 is directed to an embodiment wherein urethane resin is used as the potting material 12. However, it is to be noted that the potting material 12 is not limited to urethane resin and the hollow fiber membrane module 10 can be manufactured in a similar manufacturing process even when another resin is used. In the present embodiment, epoxy resin is used as the potting material 12 in order to improve mechanical strength. Alternatively, in the present embodiment, urethane resin is used as the potting material 12 from the viewpoint of shortening the manufacturing time and improving productivity.

By arranging a hollow fiber membrane bundle in a cylindrical shape so that the hollow fiber membranes 11 can be inserted into the module case 13, the membrane area per membrane module, that is, the filtration area can be maximized. The outer circumference of the hollow fiber membrane bundle may be further covered with a protective net. The net can be made of any material and examples of desirable materials include polyethylenes, polypropylenes, polyvinyl alcohols, and ethylene vinyl acetate copolymers. If highly packed with the hollow fiber membranes, the flow of the feed or filtrate becomes poor, or the cleaning efficiency in the backwashing step during operation is lowered. It is desirable that the total cross-sectional area of hollow fiber membranes 11 inserted into the module case 13 with respect to the inner diameter cross-sectional area of the module case 13 is 40% to 70%, although it depends operation method. It is desirable that opposing ends of the hollow fiber membrane bundle are sealed so as not to be clogged by the potting agent in the subsequent potting step. Epoxy resin, polyurethane resin, silicone resin or the like is used as the sealing material.

After inserting the sealed hollow fiber membrane bundle into the molded plastic part 22 having a desired shape, a potting step is performed wherein a potting agent is applied to opposing ends of the plastic part 22 for bonding. Bonding methods include centrifugal bonding wherein the potting material 12 is introduced by using a centrifugal force generated by rotating the plastic part 22 about the center portion of the plastic part 22, and static bonding wherein the potting material 12 is introduced by placing the plastic part 22 vertically and using a header difference. The bonding methods can be appropriately selected depending on the overall length of the hollow fiber membrane module 10, the diameter of the module case 13, and the initial viscosity and pot life of the potting agent. After the potting material 12 has been cured, the potting material 12 may be further aged at high temperatures for a certain period of time. After the potting material 12 has been fully cured, the sealed portions are removed so that the ends of hollow fiber membranes 11 are opened.

In the present embodiment, the applying step of the glass fiber-reinforced resin part 23 is described after the potting step of the plastic part 22 of the hollow fiber membrane bundle, but the applying step may be performed prior to the bonding step.

The outer surface of the plastic part 22 may be treated to improve adhesion between the plastic part 22 and the glass fiber-reinforced resin part 23. Non-limiting examples of treatment methods include chemical treatment, plasma treatment, and roughening treatment. Sand paper or sand blast can be used as the roughening method, but it is essential to remove dust generated after roughening in order to maintain adhesion. As a rough guide of degree of roughening, the surface roughness in arithmetic mean roughness (hereinafter "Ra") is preferably 1 μm or more, and more preferably 5 μm or more. The measurement method is based on JIS B 0601:1994.

The adhesion strength between the outer surface of the plastic part 22 and the glass fiber-reinforced resin part 23 is advantageously kept high from the viewpoint of integration. For example, it is desirable that the tensile shear strength is 3MPa or more. More desirably, the tensile shear strength is 4.5 MPa or more.

After the potting step described above, the applying step of the glass fiber-reinforced resin part 23 is performed. In the applying step, for continuous application of the fabric 25 such as a glass cloth or a roving cloth, hoop-winding is advantageously performed wherein the fabric 25 is progressively wound around the plastic part 22 while being partially overlapped onto itself, so that a favorable pressure resistance can be maintained. Hoop winding is a winding method that approaches an angle of substantially 90° to the axial direction, also includes helical winding slightly inclined to the axial direction. At the time of winding, the fabric 25 is desirably wound such that no space is left between the fabric 25 and the plastic part 22. As described above, on average, the ratio of overlapping of the fabric 25 onto itself during hoop winding is preferably 3% to 70%, more preferably 10% to 50%, and even more preferably 20% to 40%.

As described above, the width of the glass cloth used for hoop winding is suitably 30 mm to 140 mm although it depends on the diameter of the module case 13. Winding may be accomplished by a dedicated winding device or by manually. Winding may be accomplished while rotating the plastic part 22 about the tube axis direction.

Depending on the required pressure resistance, the aforementioned hoop winding may be repeated.

Further, if required, the outer circumference subjected to hoop winding may be covered with a roving cloth having an area capable of covering the glass cloth. At this time, one end of the roving cloth may overlap with the other end at least 1 cm, desirably 3 cm or more, and more desirably 5 cm or more. It is also important that the nozzle part and the like of the module case 13 are covered with a roving cloth that has been appropriately cut in advance into a predetermined length so as to minimize wrinkles. Furthermore, there is a tendency that gas bubbles remain easily in a portion such as the nozzle part 18 after impregnation of thermosetting resin to be described later. Therefore, the pressure resistance can be sufficiently exhibited by removing the gas bubbles with a roller or the like.

If desired, a chopped strand mat may be applied over the outer circumference of the roving cloth.

The fabric 25 made of the glass fiber 24, such as the roving cloth, glass cloth, or chopped strand mat described above, is impregnated with thermosetting resin. The fabric 25 may be impregnated with thermosetting resin prior to or after being wound around the plastic part 22. After curing the thermosetting resin impregnating the fabric 25 at room temperature, it is desirable to perform aging at temperatures between 50°C and 80°C, although depending on the material of the hollow fiber membrane 11 and the module case 13. With the thermosetting resin being fully cured, it is possible to ensure weather resistance, chemical resistance and durability. When aging is performed at temperatures exceeding 80°C, a more good strength can be obtained for the shear strength of the glass fiber-reinforced resin part 23 itself and between the outer surface of the plastic part 22 and the glass fiber-reinforced resin part 23. On the other hand, depending on the types of other materials employed in the plastic part 22 or hollow fiber membrane module 10, the aging temperature may exceed the heat-resistant temperature of the material. Further, if the hollow fiber membrane 11 is dried at such a high temperature for a long time, water may evaporate from the pores of the hollow fiber membrane 11 and water permeability may not be maintained.

With the above-described structure, even if a maximum internal pressure force of 1. 0MPa is applied to the inner surface of the housing body 14 and the hollow fiber membrane module 10 is longitudinally constrained by stainless steel pipes during the filtration step or backwashing step, it is possible to limit % diameter expansion of the hollow fiber membrane module 10 to 0.3% or less and thus to ensure enough durability against the repetitive pressure fluctuation associated with operation.

After aging, the surface layer of the glass fiber-reinforced resin part 23 may be sanded as required. Depending on the application, coating may be applied to the surface layer of the glass fiber-reinforced resin part 23. The thickness of the coating is preferably at most about 30 μm. At greater thicknesses, organic solvent in the paint may not properly volatilize and remain as gas bubbles hole in the coating layer.

According to the hollow fiber membrane module 10 configured as described above, for example, by introducing a feed into the hollow fiber membrane module 10 through the nozzle part 18, the feed filtered by the hollow fiber membrane 11 is discharged from the hollow fiber membrane module 10 through at least one of the conduits 21, and the retentate is discharged from the hollow fiber membrane module 10 through the other one of the nozzle parts 18. (external pressure type filtration, see FIG. 2).

Also, by introducing a feed into the hollow fiber membrane module 10 through one of the conduits 21, a retentate is discharged from the hollow fiber membrane module 10 through the other one of the conduits 21, and the feed filtered by the hollow fiber membrane 11 is discharged from the hollow fiber membrane module 10 through the two nozzle parts 18 (internal pressure type filtration, see FIG. 2).

By covering the outer circumference of the plastic part 22 with the glass fiber-reinforced resin part 23, it may be possible to prevent contact between the feed such as water and the glass fiber-reinforced resin part 23. Thus, the hollow fiber membrane module 10 may be used in such applications where contact between the feed and the resin containing the glass fiber 24 is undesirable.

Hereinafter, a filtration system using the hollow fiber membrane module 10 according to the present embodiment will be described in detail.

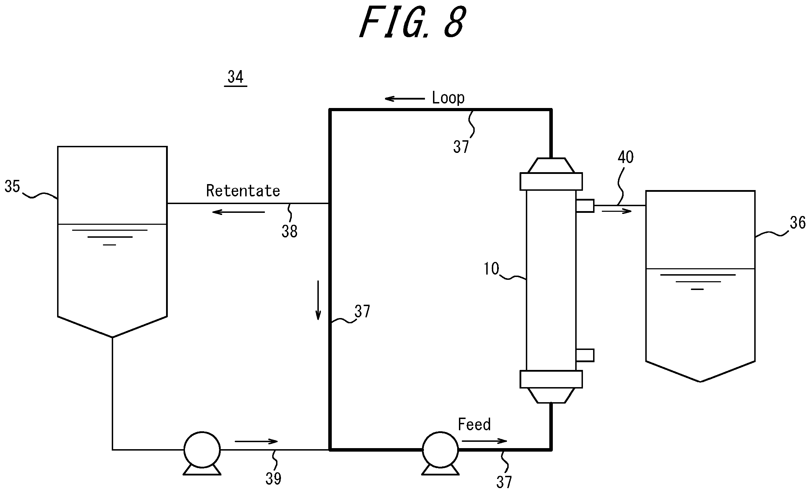

As shown in FIG. 8, a filtration system 34 for purifying effervescent beverages includes a pressure-resistant hollow fiber membrane module 10, a feed tank 35, a filtrate tank 36, a loop pipe 37, a return pipe 38, a supply pipe 39, and a filtrate pipe 40. The feed tank 35 contains an unfiltered effervescent beverage. The filtrate tank 36 contains a filtered effervescent beverage. The loop line 37 is annularly connected to the lower and upper conduits 21 of the hollow fiber membrane module 10. The return pipe 38 returns a retentate from the loop pipe 37 to the feed tank 35. The supply pipe 39 connects the lower end of the feed tank 35 to the vicinity of the primary side inlet of the hollow fiber membrane module 10 in the loop pipe 37. The filtrate pipe 40 connects either one or two of the upper and lower nozzle parts 18 of the hollow fiber membrane module 10 to the filtrate tank 36.

The loop pipe 37 and the filtrate pipe 40 are often made of stainless steel to ensure sanitary properties. If a pressure is applied by supplying a feed in a configuration in which the top and bottom of the hollow fiber membrane module 10 are connected to and fixed by stainless-steel pipes, deformation occurs wherein the hollow fiber membrane module 10 is more radially expanded while elongation in the longitudinal direction is limited. The relation $0.5<R/L<4$ is advantageously satisfied when the inside of the module case 13 is pressurized to 1.0 MPa in an unconstrained state in which the module is not longitudinally constrained such that % diameter expansion of the center portion of the pipe-shaped part 16 is R% and % longitudinal elongation is L%. When R/L is smaller than 0.5, % elongation L is so larger than % diameter expansion that, when the module is longitudinally constrained, loads may be generated in the enlargement direction more than usual. When R/L is 4 or more, % diameter expansion is large, so if a stress is added radially with constrained longitudinal direction, it may not be able to withstand long-term stress fluctuations. Therefore, % diameter expansion R at the time of the filtration operation is desirably at most 0.3%, more desirably 0.25% or less, and more desirably 0.15% or less. Further, in a portion in the axial direction of the pipe-shaped part 16 in the header part 18, when % diameter expansion in a portion near the position of the root of the pipe-shaped part 16 of the nozzle part 18 is R2%, it is desirably 0.2% or less, more preferably 0.15% or less. Since a stress is likely to occur in the root, R2% is preferably smaller than R% in the center portion of the pipe-shaped part 16, and more preferably $R2 \leq 0.5 \times R$ is held. Incidentally, during the filtration operation, for example, in the filtration step, the pressure inside the module case 13 is at most 0.8 MPa in a liquid temperature condition of 4°C, at most 0.7 MPa in a liquid temperature condition of 40°C, and 0.6 MPa in a liquid temperature condition of 80°C. In the backwashing step using a filtrate, the pressure inside the module case 13 is at most 1.0 MPa in a liquid temperature condition of 4°C, at most 0.9 MPa in a liquid temperature condition of 40°C, and at most 0.8 MPa in a liquid temperature condition of 80°C. The filtration and backwashing steps are performed at intervals of 2 to 20 minutes, depending on the rate of increase the transmembrane differential pressure.

The hollow fiber membrane module 10 is configured to filtrate unfiltered effervescent beverages. The hollow fiber membrane module 10 in the filtration system 34 shown in FIG. 8 may be an external pressure filtration module shown in FIG. 2, in which a feed is supplied to the outer surface side of the hollow fiber membrane 11 and the filtrate is removed from the inner surface side. Alternatively, the hollow fiber membrane module 10 in the filtration system 34 shown in FIG. 8 may be an internal pressure filtration module shown in FIG. 2, in which a feed is supplied to the inner surface side of the hollow fiber membrane 11 and the filtrate is removed from the outer surface side.

In the following explanation, "primary side" refers to a hollow fiber membrane module 10's side through which liquids to be passed through the hollow fiber membrane 11 are supplied. "Secondary side" refers to a hollow fiber membrane module 10's side through which liquids that have passed through the hollow fiber membrane 11 from one surface to the other are discharged. In the backwashing step, backwashing fluids are passed in a direction opposite to the direction in which fluids are allowed to pass through the membrane surface of the hollow fiber membrane 11 in the filtration step. Thus, the primary and secondary sides in the filtration step correspond to the secondary and primary sides in the backwashing step, respectively.

In the filtration system 34, filtration is performed at an internal pressure of the hollow fiber membrane module 10 of 0.3 MPa to 1.0 MPa. "Filtration is performed at 0.3 MPa to 1.0 MPa" means that, unless otherwise specified, a pressure of 0.3 MPa to 1.0 MPa is applied in the hollow fiber membrane module 10 during at least one of the filtration and backwashing steps. "Pressure is applied in the hollow fiber membrane module 10" means that a pressure is applied at least in the housing body 14.

The filtrate tank 36 holds therein a filtrate under pressure in order to prevent carbon dioxide dissolved in the beverage at a concentration 3.92g/L or more from escaping from the beverage. Therefore, a pressure of up to 0.6 MPa may be applied to the secondary side of the hollow fiber membrane module 10 during filtration, depending on the transmembrane differential pressure.

In the case of internal pressure type, the hollow fiber membrane module 10 may be operated under conditions wherein the maximum value of pressure on the feed side (primary side) is 0.6 MPa or more and 1.0 MPa or less, the minimum value of pressure on the filtrate side (secondary side) is 0.3 MPa or more and the maximum value thereof is 0.6 MPa or less, and the maximum value of differential pressure between membrane inner surface and membrane outer surface of 0.4 MPa or less.

More specifically, since gas is dissolved in the feed in the filtration step, pressures of 0.3 MPa or more have been applied to both the feed tank 35 and the filtrate tank 36. Therefore, during a filtration operation, the pressure on the feed side (primary side) will be 0.3 MPa or more and 1.0 MPa or less and the pressure on the filtrate side (secondary side) will be 0.3 MPa or more and 0.6 MPa or less, although depending on the clogging state of the fine pores and inner surface portion of the hollow fiber membrane 11.

In addition, an operation may be performed under an operation condition in which a backwashing step using a filtrate is periodically performed together with the filtration step. When switching from the filtration step to the backwashing step, the pressure of the hollow fiber membrane module 10 is not completely released, and the backwashing step may be performed while maintaining a pressure of 0.3 MPa or more on the feed side. The use of filtrate, rather than water, during backwashing not only enables rapid washing but prevents unwanted mixing of water with liquids to be treated. The maximum value of the pressure on the feed side in the backwashing step is 50% or less of that in the filtration step.

Since the outer circumference of the plastic part of the module case 13 of the hollow fiber membrane module 10 of present disclosure is reinforced by the glass fiber-reinforced resin part 23, when internal pressure filtration is performed, the operation can be continued without causing breakage of the module case 13 even if a pressure is repeatedly applied to the primary side of the inner surface of the hollow fiber membrane 11 at a maximum of 1 MPa and at a maximum of 0.6 MPa for a long period of time. Transfer of glass fiber into the filtered food product can also be completely prevented. Further, since there is no direct contact with a thermal alkali used at the time of chemical washing, it is possible to prevent deterioration.

EXAMPLES

The present disclosure will be described in more detail based on Examples, but present disclosure is not limited thereto.

Measurement methods and test methods used in Examples will be described.

(Thickness of glass fiber-reinforced resin part)

The thickness of a glass fiber-reinforced resin part was measured as follows. A module case after covered with a glass fiber-reinforced resin part was cut to expose a cross section of the glass fiber-reinforced resin part and the thickness was measured at three points and averaged.

(Inner diameter and outer diameter of hollow fiber membrane)

The inner diameter and outer diameter of the hollow fiber membrane were determined as follows. The hollow fiber membrane was cut thinly with a razor or the like in a direction perpendicular to the membrane longitudinal direction, and the major axis and minor axis of the inner diameter of the cross section and the major axis and minor axis of the outer diameter of the cross section were measured using a scanning electron microscope. The inner diameter and outer diameter were determined using the following equations (1) and (2), respectively. In the present embodiment, the inner diameter and outer diameter of each of 20 arbitrarily chosen hollow fiber membranes are measured, and an arithmetic mean is calculated.

$$\text{Inner dia. [mm]} = \frac{\text{inner major dia.[mm]} + \text{inner minor dia.[mm]}}{2} \dots (1)$$

$$\text{Outer dia. [mm]} = \frac{\text{outer major dia.[mm]} + \text{outer minor dia.[mm]}}{2} \dots (2)$$

(Thickness in membrane thickness direction of hollow fiber membrane)

The thickness in membrane thickness direction of the hollow fiber membrane was measured as follows. As described above, the inner diameter (A) and outer diameter (B) of the hollow fiber membrane were measured, and the thickness in membrane thickness direction of the hollow fiber membrane film was obtained based on the following equation (3).

$$\text{Thickness of hollow fiber membrane} = (B-A)/2 \dots (3)$$

In the present embodiment, the membrane thickness of the hollow fiber membrane was obtained by measuring the membrane thickness of each of 20 arbitrarily chosen hollow fiber membranes and calculating an arithmetic mean.

(Glass-transition temperature)

Glass-transition temperature was measured using a differential scanning calorimeter (DSC) from Perkin Elmer (model: DSC8000). The measurement method was based the glass-transition temperature measurement method according to JIS K7121. Indium was used as a reference substance. Specifically, from a completed hollow fiber membrane module, about 5 mg of glass fiber-reinforced resin was collected, sealed in a dedicated sample container, and the sample container was installed in the apparatus. The temperature inside the apparatus was then adjusted to 20°C and a measurement was started. The temperature of the sample was raised in the range of 0°C to 200°C. Heating rate was set to 10°C/min. The midpoint glass transition temperature (Tg) was calculated from the obtained results and defined as glass-transition temperature.

(Shear strength)

Shear strength was measured as follows: Sample was cut from the pipe-shaped part of an actually fabricated membrane module. After a stick-shaped sample having a total length of 180 mm and a width of 10 mm was cut out from the longitudinal direction of the pipe part, processing was performed such that only a plastic portion (polysulfone, which will be described later) is left on one side and only a glass fiber-reinforced resin part is left on the other side in a portion other than a 12.5 mm $\times$ 10 mm center portion in the longitudinal direction of the sample. Other shear test conditions were based on the test method of JIS K 7161 plastics-tensile property.

(Instantaneous fracture test)

In the instantaneous fracture test, an internal pressure was applied to a hollow fiber membrane module, and the pressure at the time when the case was fractured was taken as the pressure at the time of fracture. The inside of the hollow fiber membrane module was filled with water, and two nozzle parts and one cap part were sealed. Air pressure was added slowly at 0.2 MPa/sec from the remaining one cap part. All tests were carried out at a water temperature of 40°C. The test was carried out with the membrane module longitudinally constrained.

(Fatigue fracture test)

In a fatigue fracture test, an internal pressure was repeatedly applied to the hollow fiber membrane module until it reached 1.0 MPa, and the count when the case was destroyed was recorded. The inside of the hollow fiber membrane module was filled with water, and the two nozzle parts and one cap part were sealed. Air pressure was added from the remaining one cap part. Pressure was applied 6 times per minute. All tests were carried out at a water temperature of 40°C The test was carried out with the membrane module longitudinally constrained.

(Measurements of % diameter expansion and % overall length elongation of housing)

% Diameter expansion and % overall length elongation of the housing were measured as follows. The inside of the hollow fiber membrane module was filled with water, and two nozzle parts and one cap part were sealed. Air pressure was added from the remaining one cap part. Pressure was applied 6 times per minute. All tests were carried out at a water temperature of 40°C. Changes in the diameter or overall length of the pipe part before and after pressure application were measured directly using a caliper (Mitutoyo Corporation). When the module was longitudinally constrained, only diameter changes were measured, and in the case of an unconstrained free state, diameter changes and overall length changes were measured.

(Measurement of glass fiber length)

The length of glass fiber was measured by transmission observation using an X-ray computed tomography device. As the device, nano3DX, a high-resolution 3D X-ray microscope manufactured by Rigaku Corporation, was used. When measurements were difficult with the above procedure, components other than glass fiber of the fiber-reinforced resin part were burned off by a heating furnace or the like, and then the length of glass fiber was observed using a scale, an optical microscope, or an electron microscope.

(Example 1)

In Example 1, as a material of a module case, polysulfone resin (manufactured by Solvay) was used for a plastic part. The outer surface of the plastic part was previously roughened with sandpaper in order to improve adhesion. When roughening was performed with #100 sand paper, the surface roughness (Ra) after roughening was 6.6 $\mu$m. A bandage-shaped glass cloth (manufactured by Maeda Glass Co., Ltd., ECM13100-A) having a width of 100 mm was continuously wound around the outer circumference of the plastic part of the pipe-shaped part so as to overlap with each other at a ratio of 3% on average. At this time, when the glass fiber oriented substantially parallel to the tube axis of the module case is taken as a warp yarn and the glass fiber oriented substantially perpendicular to the tube axis of the module case is taken as a weft yarn, the warp yarn was about 100 mm in length and the weft yarn was about 18 m in length As the glass cloth, a plain weave was used in which warp yarns and weft yarns were woven orthogonal to each other. Thereafter, a sheet-shaped roving cloth (WF350-100BS6, manufactured by Boseki Co., Ltd.) was wound. Further, a sheet-shaped chopped strand mat (MC300-A, manufactured by Nitto Boseki Co., Ltd.) was wound around the outer circumference of the roving cloth such that two layers of the chopped strand mat are formed. The used chopped strand mat had an average glass fiber length of 5 cm, in which glass fibers are randomly arranged in sheet form and fixed to one another with a binder. After winding, epoxy resin was impregnated and air was pushed out using a roller for adhesion. Similarly, the glass cloth and chopped strand mat were wound around the header parts and nozzle parts. The epoxy resin used was a blend of JER811 (manufactured by Mitsubishi Chemical Corp.) as a main agent, triethylenetetramine (TETA) (manufactured by Tosoh Corporation) as a curing agent, and SR-TMP (manufactured by Sakamoto Yakuhin Kogyo, Co., Ltd.) as a reactive diluent. After impregnating the glass cloth and chopped strand mat with the epoxy resin, the epoxy resin was aged for 8 hours for curing while rotating the workpiece at 50°C. In this way a hollow fiber membrane module of Example 1 was manufactured

For the hollow fiber membrane module of Example 1, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.14%, % overall length elongation L was 0.09%, and R/L was 1.63. Further, when a pressure of 1.0 MPa was applied with longitudinal constraint, the diameter expansion rate R1 of the center portion was 0.16%, and the diameter expansion rate R2 of the nozzle root (pipe center side) of the header part was 0.07%. Thereafter, the instantaneous fracture test was carried out with the hollow fiber membrane module constrained so as not to deform longitudinally. The test results are given in Table 1 together with the various conditions such as materials and sizes of the plastic part, glass fiber-reinforced resin part, hollow fiber membrane, and potting material. As shown in Table 1, in the case of the hollow fiber membrane module of Example 1, the module case was not destroyed at least until 5 MPa. Cycling life test was performed with the module longitudinally constrained similarly. The test reached one million cycles and no hollow fiber membrane module breakage was observed. The hollow fiber membrane module was disassembled after completion of the test, and no abnormalities were observed.

The hollow fiber membrane module of Example 1 was subjected to filtration of a sparkling wine in which 4 g/L of carbon dioxide was dissolved. The concentration of carbon dioxide contained in the sparkling wine was measured by a carbon dioxide measuring sensor (Carbo150) manufactured by Anton-Paar. The temperatures of the unfiltered sparkling wine and filtrate were kept at 2°C. The two openings of the hollow fiber membrane bundle located at opposing longitudinal ends of the hollow fiber membrane module were fitted with caps for coupling with pipes and fixed with nuts. Fixed stainless steel pipes were connected to the two caps. Fixed stainless steel pipes were also connected to the upper and lower nozzle parts. Internal pressure filtration was performed by introducing the feed sparkling wine from the underside of the vertically placed hollow fiber membrane module. The pressure on the primary side (the pressure on the inner surface side in the hollow fiber membrane) at the start of the filtration operation was 0.35 MPa, and the pressure on the secondary side (the pressure on the outer surface side in the hollow fiber membrane) was 0.3 MPa. Approximately 3 minutes after the start of the filtration operation, a backwashing operation using the filtrate was carried out for 5 seconds by adjusting the primary and secondary pressures in the hollow fiber membrane module without releasing the pressures. At this time, the primary side pressure (pressure on the outer surface side in the hollow fiber membrane) was 0.4 MPa, and the secondary side pressure (pressure on the inner surface side in the hollow fiber membrane) was 0.3 MPa. The filtration and backwashing operations described above were continued alternately, and the filtration operation was finally completed at the stage where the primary pressure during the filtration operation reached 1.0 MPa. The external appearance of the hollow fiber membrane module after completion of the operation was observed, but defects such as leakage was not particularly confirmed. The carbon dioxide concentration retention rate in the sparkling wine after filtration was 100%.

Table 1

| | | | | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| Hollow fiber membrane | Material | | | PVDF | PVDF | PVDF | PVDF | PVDF | PVDF | PVDF | PVDF |
| | Inner diameter/outer diameter (mm) | | | 1.4 / 2.0 | 1.4 / 2.0 | 1.4 / 2.0 | 1.4 / 2.0 | 1.4 / 2.0 | 1.4 / 2.0 | 1.4 / 2.0 | 1.4 / 20 |
| Potting material | | | | Epoxy resin | Epoxy resin | Epoxy resin | Epoxy resin | Epoxy resin | Epoxy resin | Epoxy resin | Epoxy resin |
| Housing | Plastic part | Pipe-shaped part | | Polysulfone | Polysulfone | Polysulfone | Polysulfone | Polysulfone | Polysulfone | Polysulfone | Polysulfone |
| | | Header part | | Polysulfone | Polysulfone | Polysulfone | Polysulfone | Polysulfone | Polysulfone | Polysulfone | Polysulfone |
| | Glass fiber-reinforced resin part | Pipe-shaped part | Bandage-shaped glass cloth | Single layer | Single layer | Single layer | Single layer | Three layers | Single layer | None | None |
| | | | Weight per unit area of bandage-shaped glass cloth (g/m$^2$) | 300 | 300 | 300 | 300 | 300 | 300 | - | - |
| | | | Angle at which the glass cloth is continously wound about tube axis (°) | 750 | 750 | 750 | 750 | Continuous over entire circumference | 750 | - | - |
| | | | Bandage-shaped cloth width (mm) | 50 | 50 | 50 | 50 | 50 | 50 | - | - |
| | | | Bandage-shaped cloth overlapping width (mm) | 35 | 35 | 35 | 35 | 35 | 35 | - | - |

EP 3 708 243 B1

13

(continued)

| | | | | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| | | | Ratio of bandage-shaped cloth overlapped onto itself | 70 | 70 | 70 | 70 | 70 | 70 | - | - |
| | | | Sheet-shaped roving cloth | Two layers | Single layer | Two layers | Two layers | - | Two layers | - | - |
| | | | Weight per unit area of sheet-shaped roving cloth $(g/m^2)$ | 350 | 350 | 350 | 350 | - | 350 | - | - |
| | | | Chopped strand mat | Two layers | Single layer | Two layers | Two layers | - | Two layers | - | - |
| | | | Weight per unit area of chopped strand mat $(g/m^2)$ | 380 | 380 | 380 | 380 | - | 380 | - | - |
| | | | Plastic part thickness (mm) | 5.5 | 5.5 | 5.5 | 5.5 | 5.5 | 5.5 | 5.5 | 5.5 |
| | | | Glass fiber-reinforced resin part thickness (mm) | 4.7 | 42 | 4.7 | 4.7 | 2.8 | 4.7 | 0 | 0 |
| | | | Wall thickness ratio (%) | 46.1 | 43.3 | 46.1 | 46.1 | 33.7 | 46.1 | 0.0 | 0.0 |

| | | | | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| | | | Overlapping width of glass fiber with header part (mm) | 500 | 500 | 500 | 500 | 350 | 500 | - | - |
| | Glass fiber-reinforced resin part | Header part | Sheet-shaped roving cloth | Two layers | Single layer | Three layers | Two layers | Two layers | Two layers | - | Two layers |
| | | | Weight per unit area of sheet-shaped roving cloth (g/m$^2$) | 350 | 350 | 350 | 350 | 350 | 350 | - | 350 |
| | | | Chopped strand mat | Two layers | Single layer | Three layers | Two layers | Two layers | Two layers | - | Two layers |
| | | | Weight per unit area of chopped strand mat (g/m$^2$) | 380 | 380 | 380 | 380 | 380 | 380 | - | 380 |
| | | | Angle of glass fiber in mat with respect to tube axial direction(° ) | 0-90 | 0-90 | 0-90 | 0-90 | 0-90 | 0-90 | - | 0-90 |
| | | | Plastic part thickness (mm) | 10 | 10 | 10 | 10 | 10 | 10 | 7.2 | 10 |

EP 3 708 243 B1

15

(continued)

| | | | | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| | | | Glass fiber-reinforced resin part thickness (mm) | 4.8 | 2.7 | 6.9 | 4.8 | 4.8 | 4.8 | 0 | 4.8 |
| | | | Wall thickness ratio (%) | 32.4 | 21.3 | 40.8 | 32.4 | 32.4 | 32.4 | 0.0 | 32.4 |
| | Glass fiber-reinforced resin part | Nozzle part | Bandage-shaped glass cloth | Two layers | Single layer | Three layers | Two layers | Two layers | Two layers | None | Two layers |
| | | | Weight per unit area of bandage-shaped glass cloth (g/m$^2$) | 150 | 150 | 150 | 150 | 150 | 150 | - | 150 |
| | | | Bandage-shaped cloth width (mm) | 70 | 70 | 70 | 70 | 70 | 70 | - | 70 |
| | | | Sheet-shaped roving cloth | Single layer | Single layer | Single layer | Single layer | Single layer | Single layer | - | Single layer |
| | | | Weight per unit area of sheet-shaped roving cloth (g/m$^2$) | 300 | 300 | 300 | 300 | 300 | 300 | - | 300 |
| | | | Chopped strand mat | Single layer | Single layer | Single layer | Single layer | Single layer | Single layer | - | Single layer |

| | | | | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| | | | Weight per unit area of chopped strand mat (g/m$^2$) | 300 | 300 | 300 | 300 | 300 | 300 | - | 300 |
| | | | Angle of glass fiber in mat with respect to tube axial direction(° ) | 0-90 | 0-90 | 0-90 | 0-90 | 0-90 | 0-90 | - | 0-90 |
| | | | Plastic part thickness (mm) | 6 | 6 | 6 | 6 | 6 | 6 | 4 | 6 |
| | | | Glass fiber-reinforced resin part thickness (mm) | 3 | 22 | 22 | 3 | 3 | 3 | 0 | 3 |
| | | | Overlapping width of nozzle part glass fiber with nozzle part (mm) | 25 | 25 | 25 | 25 | 25 | 25 | - | 25 |
| | | | Wall thickness ratio (%) | 33.3 | 26.8 | 26.8 | 33.3 | 33.3 | 33.3 | 0.0 | 33.3 |
| Glass fiber-reinforced resin part | Impregnation resin | Main agent | | JER811 | JER811 | JER811 | JER811 | JER811 | JER811 | JER811 | JER811 |
| | | Curing agent | | TETA | TETA | TETA | TETA | TETA | TETA | TETA | TETA |
| | | Reactive diluent | | SR-TMP | SR-TMP | SR-TMP | SR-TMP | SR-TMP | SR-TMP | SR-TMP | SR-TMP |

EP 3 708 243 B1

(continued)

| | | | | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|---|---|
| Results | Shear strength of plastic part and glass fiber-reinforced resin part (MPa) | | | 5.1 | 5.1 | 5.1 | 3.2 | 5.1 | 2.5 | 5.1 | 5.1 |
| | Glass transition temperature of impregnation resin (°C) | | | 86 | 86 | 89 | 86 | 86 | 86 | 86 | 86 |
| | At 1.0 MPa pressure without longitudinal constraint | Diameter expansion R1 of center portion of pipe-shaped part (%) | | 0.14 | 0.21 | 0.14 | 0.14 | 0.10 | 0.14 | 0.37 | 0.40 |
| | | Overall length elongation L (%) | | 0.09 | 0.11 | 0.09 | 0.09 | 0.14 | 0.09 | 0.07 | 0.07 |
| | | R/L | | 1.63 | 1.91 | 1.56 | 1.63 | 0.71 | 1.63 | 5.66 | 5.71 |
| | At 1.0 MPa pressure with longitudinal constraint | Diameter expansion R1 of center portion of pipe-shaped part (%) | | 0.16 | 0.24 | 0.16 | 0.16 | 0.13 | 0.16 | 0.44 | 0.42 |
| | | Diameter expansion R2 of nozzle root of header (%) | | 0.07 | 0.10 | 0.05 | 0.07 | 0.06 | 0.07 | 0.26 | 007 |
| | Instantaneous fracture test | Pressure at break | | >5MPa | >5MPa | >5MPa | >5MPa | 5MPa | >5MPa | 3.8MPa | 3.8MPa |
| | Cycling life test | Cycle count at break | | >1,000,000 | >1,000,000 | >1,000,000 | >1,000,000 | >1,000,000 | 750,000 | 126,000 | 104,000 |
| | | Fracture site | | - | - | - | - | - | Pipe part | Pipe part | Pipe part |

(Example 2)

In Example 2, one layer of a sheet-like roving cloth and one layer of a chopped strand mat were stacked. The other conditions were the same as in Example 1. For the hollow fiber membrane module of Example 2, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.21%, % overall length elongation L was 0.11%, and R/L was 1.91. Further, when a pressure of 1.0 MPa was applied with longitudinal constraint, % diameter expansion R1 of the center portion was 0.24%, and % diameter expansion R2 of the nozzle root (pipe center side) of the header part was 0.10%. An instantaneous fracture test was performed on the hollow fiber membrane module of Example 2. The test results are given in Table 1 together with the test conditions. As shown in Table 1, in the hollow fiber membrane module of Example 2, the module case was not destroyed at least until 5 MPa. Cycling life test was performed with the module longitudinally constrained similarly. The test reached one million cycles and no hollow fiber membrane module breakage was observed. The hollow fiber membrane module was disassembled after completion of the test, and no abnormalities were observed.

(Example 3)

In Example 3, three layers of a sheet-shaped roving cloth and three layers of a chopped strand mat were stacked at the header part. The other conditions are the same as in Example 1. For the hollow fiber membrane module of Example 2, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.14%, % overall length elongation L was 0.09%, and R/L was 1.56. Further, when a pressure of 1.0 MPa was applied with longitudinal constraint, % diameter expansion R1 of the center portion was 0.16%, and % diameter expansion R2 of the nozzle root (pipe center side) of the header part was 0.05%. An instantaneous fracture test was performed on the hollow fiber membrane module of Example 3. The test results are given in Table 1 together with the test conditions. As shown in Table 1, in the hollow fiber membrane module of Example 3, the module case was not destroyed at least until 5 MPa. Cycling life test was performed with the module longitudinally constrained similarly. The test reached one million cycles and no hollow fiber membrane module breakage was observed. The hollow fiber membrane module was disassembled after completion of the test, and no abnormalities were observed.

(Example 4)

In Example 4, roughening treatment on the outer surface of the plastic part as performed in Example 1 was performed using #120 sandpaper, followed by covering with the fiber reinforced resin part. The surface roughness Ra of the roughened outer surface of the plastic part was 2.7 $\mu$m. The other conditions are the same as in Example 1. For the hollow fiber membrane module of Example 4, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.14%, % overall length elongation L was 0.09%, and R/L was 1.63. Further, when a pressure of 1.0 MPa was applied with longitudinal constraint, % diameter expansion R1 of the center portion was 0.16%, and % diameter expansion R2 of the nozzle root (pipe center side) of the header part was 0.07%. An instantaneous fracture test was performed on the hollow fiber membrane module of Example 4. The test results are given in Table 1 together with the test conditions. As shown in Table 1, in the hollow fiber membrane module of Example 4, the module case was not destroyed at least until 5 MPa. Cycling life test was performed with the module longitudinally constrained similarly. The test reached one million cycles and no hollow fiber membrane module breakage was observed. The hollow fiber membrane module was disassembled after completion of the test, and partial separation was observed at the boundary between the outer surface of the plastic part and the glass fiber-reinforced resin part.

(Example 5)

In Example 5, the bandage-shaped glass cloth used in Example 1 was wound to form three layers and was also continuously wound over the entire surface of the pipe-shaped part without leaving any uncovered area. No sheet-shaped cloth and chopped strand mat were used. The other conditions are the same as in Example 1. For the hollow fiber membrane module of Example 5, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.10%, % overall length elongation L was 0.14%, and R/L was 0.71. Further, when a pressure of 1.0 MPa was applied with longitudinal constraint, % diameter expansion R1 of the center portion was 0.13%, and % diameter expansion R2 of the nozzle root (pipe center side) of the header part was 0.06%. An instantaneous fracture test was performed on the hollow fiber membrane module of Example 5. The test results are given in Table 1 together with the test conditions. As shown in Table 1, in the hollow fiber membrane module of Example 5, the module case was not destroyed at least until 5 MPa. Cycling life test was performed with the module longitudinally constrained similarly. The test reached one million cycles and no hollow fiber membrane module breakage was observed. The hollow fiber membrane module was disassembled after completion of the test, and no abnormalities were observed.

(Example 6)

In Example 6, roughening treatment on the outer surface of the plastic part as performed in Example 1 was performed using #240 sandpaper, followed by covering with the fiber-reinforced resin part. The surface roughness Ra of the roughened outer surface of the plastic part was 0.8 $\mu$m. The other conditions are the same as in Example 1. For the hollow fiber membrane module of Example 6, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.14%, % overall length elongation L was 0.09%, and R/L was 1.63. Further, when a pressure of 1.0 MPa was applied with longitudinal constraint, % diameter expansion R1 of the center portion was 0.16%, and % diameter expansion R2 of the nozzle root (pipe center side) of the header part was 0.07%. An instantaneous fracture test was performed on the hollow fiber membrane module of Example 6. The test results are given in Table 1 together with the test conditions. As shown in Table 1, in the hollow fiber membrane module of Example 6, the module case was not destroyed at least until 5 MPa. Cycling life test was performed with the module longitudinally constrained similarly. Leakage was observed at the time when the test reached 750,000 cycles. The hollow fiber membrane module was disassembled after completion of the test, and partial separation was observed at the boundary between the outer surface of the plastic part and the glass fiber-reinforced resin part. Breakage of the pipe part occurred from the separated portions.

(Comparative Example 1)

In Comparative Example 1, polysulfone (manufactured by Solvay) resin was used as the plastic material of the pipe-shaped part and the header part. No cover of the glass fiber-reinforced resin part was applied on the outer surface of the plastic part of the module case. For the hollow fiber membrane module of Comparative Example 1, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion of the center portion was 0.37%, % overall length elongation L was 0.07%, and R/L was 5.66. Further, when a pressure of 1.0 MPa was applied with longitudinal constraint, % diameter expansion R1 of the center portion was 0.44%, and % diameter expansion R2 of the nozzle root (pipe center side) of the header part was 0.26%. An instantaneous fracture test was performed on the hollow fiber membrane module of Comparative Example 1. The test results are given in Table 1 together with the test conditions. As shown in Table 1, the hollow fiber membrane module of Comparative Example 1 was destroyed at 3.8 MPa. Cycling life test was performed with the module longitudinally constrained similarly, and the module case was fractured in 126,000 cycles. Destruction occurred in the pipe-shaped part of the module case. In addition, some fracture was also generated at the nozzle root of the header part.

(Comparative Example 2)

In Comparative Example 2, polysulfone (manufactured by Solvay) resin was used as the plastics material of the pipe-shaped part and the header part. The outer surface of the pipe part of the plastic part of the module case was not covered, and only the header parts and nozzle parts were covered with the glass fiber-reinforced resin part. For the hollow fiber membrane module of Comparative Example 2, the pipe diameter of the center portion of the pipe-shaped part before and after applying an internal pressure of 1.0 MPa in a free state without constraining the hollow fiber membrane module was measured by a caliper. Changes in the overall length of the hollow fiber membrane module were measured in the same manner. As a result, % diameter expansion R of the center portion was 0.40%, % overall length elongation L was 0.07%, and R/L was 5.71. Further, when a pressure of 1.0 MPa was applied with longitudinal constraint, % diameter expansion R1 of the center portion was 0.42%, and % diameter expansion R2 of the nozzle root (pipe center side) of the header part was 0.07%. An instantaneous fracture test was performed on the hollow fiber membrane module of Comparative Example 2. The test results are given in Table 1 together with the test conditions. As shown in Table 1, the hollow fiber membrane module of Comparative Example 2 was destroyed at 3.8 MPa. Destruction occurred in the pipe-shaped part of the module case. Cycling life test was performed with the module longitudinally constrained similarly, and the pipe part was fractured in 104,000 cycles.

**REFERENCE SIGNS LIST**

Hollow fiber membrane module

11 Hollow fiber membrane
12 Potting material
13 Module case
14 Housing body
15 Cap
16 Pipe-shaped part
17 Header part
18 Nozzle part
19 Nut
20 O-ring
21 Conduit
22 Plastic part
23 Glass fiber-reinforced resin part
24 Glass fiber
25 Glass fiber fabric
26 Flow straightening cylinder
27 Glass cloth for nozzle part
28 Pre-cut glass cloth
34 Filtration system for purifying effervescent beverages
35 Feed tank
36 Filtrate tank
37 Loop pipe
38 Return pipe
39 Supply pipe
40 Filtrate pipe

**Claims**

1. A filtration method in which filtration is performed using a hollow fiber membrane module at an internal pressure of the hollow fiber membrane module of 0.3 MPa to 1.0 MPa, the hollow fiber membrane module comprising a plurality of bundled hollow fiber membranes (11) inserted into a module case (13) and in which ends of the hollow fiber membranes (11) are integrated by a potting material (12) at both ends of the hollow fiber membranes (11), wherein:

   the module case (13) comprises a plastic part (22) which is disposed as a layer on the inner surface side in the wall thickness direction of the module case (13), and a glass fiber-reinforced resin part (23) which is disposed as a layer on the outer surface side in the wall thickness direction of the module case (13),
   **characterized in that**
   in at least a portion of the module case (13) containing the glass fiber-reinforced resin part (23), a ratio of a wall thickness of the layer of the glass fiber-reinforced resin part (23) with respect to a wall thickness of the module case (13) is 5% or more and 50% or less.

2. The filtration method of claim 1, **characterized in that**:

   the filtration method comprises a filtration step in which a beverage containing 3.92g/l or more of carbon dioxide is filtrated by at least the hollow fiber membrane module, and
   in the filtration step, a minimum pressure on a secondary side is 0.3 MPa or more and a maximum pressure on a primary side is 1.0 MPa or less.

3. The filtration method of claim 2, **characterized in that**:

the filtration step and a backwashing step are repeated,
in a state where a pressure on the primary pressure side during a backwashing operation is kept at 0.3 MPa or more when moved from the filtration step to the backwashing step, the backwashing step is performed using a filtrate, and
a relationship where the pressure on the primary side at the time of the filtration step > the pressure on the secondary side at the time of the filtration step is changed, at the time of the backwashing step, to a relationship where the pressure on the primary side at the time of the backwashing step > the pressure on the secondary side at the time of the backwashing step.

4. The filtration method of claim 1, **characterized in that**:

a filtration step in which a beverage containing 3.92g/l or more of carbon dioxide is filtrated by at least the hollow fiber membrane module, and a backwashing step are repeated,
in a state where a pressure on the primary pressure side during a backwashing operation is kept at 0.3 MPa or more when moved from the filtration step to the backwashing step, the backwashing step is performed using a filtrate, and
a relationship where the pressure on the primary side at the time of the filtration step > the pressure on the secondary side at the time of the filtration step is changed, at the time of the backwashing step, to a relationship where the pressure on the primary side at the time of the backwashing step > the pressure on the secondary side at the time of the backwashing step.

5. A hollow fiber membrane module comprising a plurality of bundled hollow fiber membranes (11) inserted into a module case (13) and in which opposing ends of the hollow fiber membranes (11) are integrated by a potting material (12), wherein:
the module case (13) comprises a plastic part (22) which is disposed as a layer on the inner surface side in the wall thickness direction of the module case (13), and a glass fiber-reinforced resin part (23) which is disposed as a layer on the outer surface side in the wall thickness direction of the module case (13),**characterized in that**:
in at least a portion of the module case (13) containing the glass fiber-reinforced resin part (23), a ratio of a wall thickness of the layer of the glass fiber-reinforced resin part (23) with respect to a wall thickness of the module case (13) is 5% or more and 50% or less.

6. The hollow fiber membrane module of claim 5, **characterized in that**:

at least a portion of the module case (13) has at least one of a glass cloth, a roving cloth, and a chopped strand mat, and
a weight per square meter of at least one of the glass cloth, the roving cloth, and the chopped strand mat is 50 g or more and 600 g or less.

7. The hollow fiber membrane module of claim 5, **characterized in that**:

the hollow fiber membrane module comprises, in the glass fiber-reinforced resin part (23), a first glass fiber-reinforced resin part for covering a pipe-shaped part (16), a second glass fiber-reinforced resin part for covering a header part (17), and a third glass fiber-reinforced resin part for covering a nozzle part (18),
a region exists in which glass fibers (24) of the first glass fiber-reinforced resin part and the second glass fiber-reinforced resin part overlap each other, and
the hollow fiber membrane module comprises a region in which glass fibers (24) of the second glass fiber-reinforced resin part and the third glass fiber-reinforced resin part overlap each other.

8. The hollow fiber membrane module of claim 5 or 7, **characterized in that**:
the glass fiber-reinforced resin part (23) and the plastic part (22) have a tensile shear strength, measured as described in the description, of 3 MPa or more.

9. The hollow fiber membrane module of any one of claims 5, 7 and 8, **characterized in that**:

at least one of a glass cloth, a roving cloth, and a chopped strand mat having the glass fiber in the glass fiber-reinforced resin part (23) is spirally wound in the module case (13), and

at least one of a glass cloth, a roving cloth, and a chopped strand mat has a width of 30 mm or more and 140 mm or less.

**Patentansprüche**

1. Filtrationsverfahren, bei dem eine Filtration unter Verwendung eines Hohlfasermembranmoduls bei einem Innendruck des Hohlfasermembranmoduls von 0,3 MPa bis 1,0 MPa durchgeführt wird, wobei das Hohlfasermembranmodul eine Vielzahl von gebündelten Hohlfasermembranen (11) umfasst, die in ein Modulgehäuse (13) eingesetzt sind, wobei Enden der Hohlfasermembranen (11) durch ein Vergussmaterial (12) an beiden Enden der Hohlfasermembranen (11) integriert sind, wobei:

   das Modulgehäuse (13) ein Kunststoffteil (22), das als Schicht auf der Innenoberflächenseite in Wanddickenrichtung des Modulgehäuses (13) angeordnet ist, und ein glasfaserverstärktes Harzteil (23), das als Schicht auf der Außenoberflächenseite in Wanddickenrichtung des Modulgehäuses (13) angeordnet ist, umfasst, **dadurch gekennzeichnet, dass** in mindestens einem Abschnitt des Modulgehäuses (13), der das glasfaserverstärkte Harzteil (23) enthält, das Verhältnis der Wanddicke der Schicht des glasfaserverstärkten Harzteils (23) in Bezug auf die Wanddicke des Modulgehäuses (13) 5% oder mehr und 50% oder weniger ist.

2. Filtrationsverfahren nach Anspruch 1, **dadurch gekennzeichnet, dass**:

   das Filtrationsverfahren einen Filtrationsschritt umfasst, in dem ein Getränk, das 3,92 g/l oder mehr Kohlendioxid enthält, zumindest durch das Hohlfasermembranmodul filtriert wird, und in dem Filtrationsschritt der Mindestdruck auf der Sekundärseite 0,3 MPa oder mehr und der Maximaldruck auf der Primärseite 1,0 MPa oder weniger beträgt.

3. Filtrationsverfahren nach Anspruch 2, **dadurch gekennzeichnet, dass**:

   der Filtrationsschritt und ein Rückspülschritt wiederholt werden, wobei in einem Zustand, in dem der Druck auf der Primärdruckseite während eines Rückspülvorgangs bei 0,3 MPa oder mehr gehalten wird, bei Übergang von dem Filtrationsschritt zu dem Rückspülschritt der Rückspülschritt unter Verwendung eines Filtrats durchgeführt wird, und die Beziehung "Druck auf der Primärseite während des Filtrationsschritts > Druck auf der Sekundärseite während des Filtrationsschritts" während des Rückspülschritts geändert wird in die Beziehung "Druck auf der Primärseite während des Rückspülschritts > Druck auf der Sekundärseite während des Rückspülschritts".

4. Filtrationsverfahren nach Anspruch 1, **dadurch gekennzeichnet, dass**:

   ein Filtrationsschritt, bei dem ein Getränk, das 3,92 g/l oder mehr Kohlendioxid enthält, zumindest durch das Hohlfasermembranmodul filtriert wird, und ein Rückspülschritt wiederholt werden, wobei in einem Zustand, in dem der Druck auf der Primärdruckseite während eines Rückspülvorgangs bei 0,3 MPa oder mehr gehalten wird, beim Übergang von dem Filtrationsschritt zu dem Rückspülschritt der Rückspülschritt unter Verwendung eines Filtrats durchgeführt wird, und die Beziehung "Druck auf der Primärseite während des Filtrationsschritts > Druck auf der Sekundärseite während des Filtrationsschritts" während des Rückspülschritts geändert wird in die Beziehung "Druck auf der Primärseite während des Rückspülschritts > Druck auf der Sekundärseite während des Rückspülschritts".

5. Hohlfasermembranmodul, welches eine Vielzahl von gebündelten Hohlfasermembranen (11) umfasst, die in ein Modulgehäuse (13) eingesetzt sind, wobei gegenüberliegende Enden der Hohlfasermembranen (11) mittels eines Vergussmaterials (12) integriert sind, wobei: das Modulgehäuse (13) ein Kunststoffteil (22), das als Schicht auf der Innenoberflächenseite in Wanddickenrichtung des Modulgehäuses (13) angeordnet ist, und ein glasfaserverstärktes Harzteil (23), das als Schicht auf der Außenoberflächenseite in Wanddickenrichtung des Modulgehäuses (13) angeordnet ist, umfasst, **dadurch gekennzeichnet, dass**: in mindestens einem Abschnitt des Modulgehäuses (13), der das glasfaserverstärkte Harzteil (23) enthält, das Verhältnis der Wanddicke der Schicht des glasfaserverstärkten Harzteils (23) in Bezug auf die Wanddicke des Modulgehäuses (13) 5% oder mehr und 50% oder weniger ist.

**6.** Hohlfasermembranmodul nach Anspruch 5, **dadurch gekennzeichnet, dass**:

mindestens ein Abschnitt des Modulgehäuses (13) mindestens eines von einem Glasgewebe, einem Roving-Gewebe oder einer Glasfasermatte aufweist, und
das Gewicht pro Quadratmeter des mindestens einen des Glasgewebes, des Roving-Gewebes oder der Glasfasermatte 50 g oder mehr und 600 g oder weniger beträgt.

**7.** Hohlfasermembranmodul nach Anspruch 5, **dadurch gekennzeichnet, dass**:

das Hohlfasermembranmodul in dem glasfaserverstärkten Harzteil (23) ein erstes glasfaserverstärktes Harzteil zur Abdeckung eines rohrförmigen Teils (16), ein zweites glasfaserverstärktes Harzteil zur Abdeckung eines Kopfteils (17) und ein drittes glasfaserverstärktes Harzteil zur Abdeckung eines Auslassteils (18) umfasst,
ein Bereich existiert, in dem Glasfasern (24) des ersten glasfaserverstärkten Harzteils und des zweiten glasfaserverstärkten Harzteils miteinander überlappen, und
das Hohlfasermembranmodul einen Bereich aufweist, in dem Glasfasern (24) des zweiten glasfaserverstärkten Harzteils und des dritten glasfaserverstärkten Harzteils überlappen.

**8.** Hohlfasermembranmodul nach Anspruch 5 oder 7, **dadurch gekennzeichnet, dass**:
das glasfaserverstärkte Harzteil (23) und das Kunststoffteil (22) eine wie in der Beschreibung beschrieben gemessene Zugscherfestigkeit von 3 MPa oder mehr aufweisen.

**9.** Hohlfasermembranmodul nach einem der Ansprüche 5, 7 und 8, **dadurch gekennzeichnet, dass**:

mindestens eines von einem Glasgewebe, einem Roving-Gewebe und einer Glasfasermatte, welche(s) die Glasfasern aufweist, in dem glasfaserverstärkten Harzteil (23) spiralförmig in dem Modulgehäuse (13) gewickelt ist, und
mindestens eines von einem Glasgewebe, einem Roving-Gewebe und einer Glasfasermatte eine Breite von 30 mm oder mehr und 140 mm oder weniger aufweist.

**Revendications**

**1.** Procédé de filtration dans lequel une filtration est effectuée en utilisant un module de membranes à fibres creuses à une pression interne du module de membranes à fibres creuses de 0,3 MPa à 1,0 MPa, le module de membranes à fibres creuses comprenant une pluralité de membranes (11) en fibres creuses en faisceau insérées dans un boîtier (13) de module et dans lequel les extrémités des membranes (11) en fibres creuses sont intégrées par un matériau (12) d'enrobage au niveau des deux extrémités des membranes (11) en fibres creuses, dans lequel :

le boîtier (13) de module comprend une partie (22) en plastique qui est disposée en tant que couche sur le côté surface interne dans la direction d'épaisseur de paroi du boîtier (13) de module, et une partie (23) en résine renforcée par des fibres de verre qui est disposée en tant que couche sur le côté surface externe dans la direction d'épaisseur de paroi du boîtier (13) de module, **caractérisé en ce que**
dans au moins une portion du boîtier (13) de module contenant la partie (23) en résine renforcée par des fibres de verre, un rapport d'une épaisseur de paroi de la couche de la partie (23) en résine renforcée par des fibres de verre par rapport à une épaisseur de paroi du boîtier (13) de module est de 5 % ou plus et de 50 % ou moins.

**2.** Procédé de filtration selon la revendication 1, **caractérisé en ce que** :

le procédé de filtration comprend une étape de filtration dans laquelle une boisson contenant 3,92 g/l ou plus de dioxyde de carbone est filtrée par au moins le module de membranes à fibres creuses, et
dans l'étape de filtration, une pression minimale sur un côté secondaire est de 0,3 MPa ou plus et une pression maximale sur un côté primaire est de 1,0 MPa ou moins.

**3.** Procédé de filtration selon la revendication 2, **caractérisé en ce que** :

l'étape de filtration et une étape de rétrolavage sont répétées,
dans un état où une pression sur le côté pression primaire pendant une opération de rétrolavage est maintenue à 0,3 MPa ou plus lors du passage de l'étape de filtration à l'étape de rétrolavage, l'étape de rétrolavage est effectuée en utilisant un filtrat, et
une relation, où la pression sur le côté primaire pendant l'étape de filtration > la pression sur le côté secondaire pendant l'étape de filtration est modifiée lors de l'étape de rétrolavage en une relation où la pression sur le côté primaire pendant l'étape de rétrolavage > la pression sur le côté secondaire pendant l'étape de rétrolavage.

4. Procédé de filtration selon la revendication 1, **caractérisé en ce que** :

une étape de filtration dans laquelle une boisson contenant 3,92 g/l ou plus de dioxyde de carbone est filtrée par au moins le module de membranes à fibres creuses, et une étape de rétrolavage sont répétées,
dans un état où une pression sur le côté pression primaire pendant une opération de rétrolavage est maintenue à 0,3 MPa ou plus lors du passage de l'étape de filtration à l'étape de rétrolavage, l'étape de rétrolavage est effectuée en utilisant un filtrat, et
une relation, où la pression sur le côté primaire pendant l'étape de filtration > la pression sur le côté secondaire pendant l'étape de filtration est modifiée lors de l'étape de rétrolavage en une relation où la pression sur le côté primaire pendant l'étape de rétrolavage > la pression sur le côté secondaire pendant l'étape de rétrolavage.

5. Module de membranes à fibres creuses comprenant une pluralité de membranes (11) en fibres creuses en faisceau insérées dans un boîtier (13) de module et dans lequel les extrémités opposées des membranes (11) en fibres creuses sont intégrées par un matériau (12) d'enrobage, dans lequel :

le boîtier (13) de module comprend une partie (22) en plastique qui est disposée en tant que couche sur le côté surface interne dans la direction d'épaisseur de paroi du boîtier (13) de module,
et une partie (23) en résine renforcée par des fibres de verre qui est disposée en tant que couche sur le côté surface externe dans la direction d'épaisseur de paroi du boîtier (13) de module,
**caractérisé en ce que** :
dans au moins une portion du boîtier (13) de module contenant la partie (23) en résine renforcée par des fibres de verre, un rapport d'une épaisseur de paroi de la couche de la partie (23) en résine renforcée par des fibres de verre par rapport à une épaisseur de paroi du boîtier (13) de module est de 5 % ou plus et de 50 % ou moins.

6. Module de membranes à fibres creuses selon la revendication 5, **caractérisé en ce que** :

au moins une portion du boîtier (13) de module comporte au moins l'un d'un tissu de verre, d'un tissu de roving, et d'un mat à fils coupés, et
un poids par mètre carré d'au moins l'un du tissu de verre, du tissu de roving et du mat à fils coupés est de 50 g ou plus et de 600 g ou moins.

7. Module de membranes à fibres creuses selon la revendication 5, **caractérisé en ce que** :

le module de membranes à fibres creuses comprend, dans la partie (23) en résine renforcée par des fibres de verre, une première partie en résine renforcée par des fibres de verre pour recouvrir une partie (16) en forme de tuyau, une deuxième partie en résine renforcée par des fibres de verre pour recouvrir une partie (17) collecteur, et une troisième partie en résine renforcée par des fibres de verre pour recouvrir une partie (18) buse,
une région existe dans laquelle des fibres de verre (24) de la première partie en résine renforcée par des fibres de verre et de la deuxième partie en résine renforcée par des fibres de verre se chevauchent, et
le module de membranes à fibres creuses comprend une région dans laquelle les fibres de verre (24) de la deuxième partie en résine renforcée par des fibres de verre et de la troisième partie en résine renforcée par des fibres de verre se chevauchent.

8. Module de membranes à fibres creuses selon la revendication 5 ou 7, **caractérisé en ce que** :
la partie (23) en résine renforcée par des fibres de verre et la partie (22) en plastique ont une résistance au cisaillement en traction, mesurée tel que décrit dans la description, de 3 MPa ou plus.

9. Module de membranes à fibres creuses selon l'une quelconque des revendications 5, 7 et 8, **caractérisé en ce que** :

au moins l'un d'un tissu de verre, d'un tissu de roving, et d'un mat à fils coupés ayant la fibre de verre dans la partie (23) en résine renforcée par des fibres de verre est enroulé en spirale dans le boîtier (13) de module, et
au moins l'un d'un tissu de verre, d'un tissu de roving, et d'un mat à fils coupés a une largeur de 30 mm ou plus et de 140 mm ou moins.

# FIG. 1

# FIG. 2

# FIG. 3

# FIG. 4

> 720°

24

22

# FIG. 5

Tube axial direction

# FIG. 6

Width of fabric

Overlapping width of fabric

25

13

Tube axial direction

EP 3 708 243 B1

# FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009160561 A
- JP 2013117250 A
- EP 2787254 A1
- US 2014092346 A1
- WO 2018092346 A1